# EUROPEAN PATENT APPLICATION

(11) **EP 0 692 711 A1**
(43) Date of publication of application: **17.01.1996**
(21) Application number: 94905275.7
(22) Date of filing: 25.01.1994
(51) Int. Cl.: G01N 27/48

(54) **ELECTRONIC SYSTEM AND DEVICE FOR THE INVESTIGATION OF MATERIALS BY THE METHOD OF VOLTAMETRIC ANALYSIS**

(71) Applicant: KEMEROVSKY GOSUDARSTVENNY UNIVERSITET, Kemerovo, 650043 (RU)
(72) Inventor: IVANOV, Jury Igorevich, Kemerovo, 650065 (RU)
(74) Representative: W.P. Thompson & Co.
(86) International application number: RU9400009
(87) International publication number: WO9520158

(57) **Abstract**

The proposed electronic system for the investigation of materials comprises a first detector electrode (3), a comparison electrode (2) and an auxiliary electrode (4), all made of the same electrically conducting material, having identical dimensions and mounted in a common housing (1) made of an inert material which entirely fills the volume of the said housing (1). A particular feature of the operation of the device is the fact that a polarising voltage is applied to the electrodes, and the current on the detector electrode measured, simultaneously with the electrochemical cleaning process, which involves the application of a polarising voltage to the other identical detector electrode which has already undergone electrochemical cleaning. The proposed device comprises an electrochemical cell (22), a polarograph (23), a polarising voltage source (25), a switching unit (26) and an electrode system (24) comprising at least six identical electrodes in the common sealed housing and mounted in the electrochemical cell (22); the electrode system is connected electrically to the inputs of the polarograph (23) and of the polarising voltage source (25). The switching unit (26) facilitates switching of the electrodes in the system (24) used as detector electrodes from the polarising voltage source (25) to the polarograph (23) and back.

## Description

### Technical Field

The present invention relates in general to means for examining materials with the aid of electrochemical means and more specifically it concerns an electrode system and a device for examining materials by voltammetric analysis techniques.

### Background Art

A three-electrode system for voltammetric analysis insertable in an electrochemical cell is known to be in a widespread use nowadays, said system comprising an indicator electrode, an auxiliary electrode, and a reference electrode. Used as the indicator electrode may be a dropping mercury electrode, or a static mercury drop electrode, or a stationary mercury drop electrode, or a stationary mercury film electrode, or a stationary amalgam film electrode with a support of silver or other suitable metal, or else stationary electrodes with a carbon-based support, e.g., impregnated graphite, carbon paste, pyrographite, carbosital, or carbon-reinforced fiber glass (cf. "Polarographic methods in analytic chemistry" by A.M.Bond, 1983, Khimia Publishers, Moscow, pp.42, 45 (in Russian); US, A, 4,260,467; "Solid-state reactions in electroanalytic chemistry" by Kh.Z.Brainina and Ye.Ya.Neiman, 1982, Khimia Publishers, Moscow, pp.228-230 (in Russian).

Applicable as indicator electrodes are also a rotated disk electrode and a rotated disk electrode with a ring whenever it is necessary to ensure an efficient withdrawal/delivery of the substances under analysis from/to the working surface of the indicator electrode (cf. "Polarographic methods in analytic chemistry" by A.M.Bond, 1983, Khimia Publishers, Moscow, pp.155-156 (in Russian). In this case the rotated disk electrode with a ring is used as an assembly of two indicator electrodes (a disk and ring) electrically insulated from each other, each being connected to its own three-electrode system (cf. "Rotated disk electrode with" ring by M.R.Tarasevich, Ye.I.Khrushcheva, and V.Yu.Filinovski, 1987, Nauka Publishers, Moscow, pp.125-128 (in Russian).

Used as reference electrodes are diverse constructions of a calomel electrode and a silver-chloride half-cell electrode, as well as electrodes made of carboniferous materials, platinum, or other metals (cf. "Polarographs and their application in practical analyses and examinations" by R.M-F.Salikhdzhanova and G.I.Ginzburg, 1988, Khimia Publishers, Moscow, p.20 (in Russian).

Used as auxiliary electrodes may be electrodes made of any current-conducting materials, e.g., a layer of mercury, a platinum wire, rods of carbon-reinforced fiber glass or carbosital.

It follows from all stated above that each of the electrodes of a three-electrode system can be made of one electrically conducting material, e.g., from carboniferous materials.

However, all the heretofore-known combinations of an indicator electrode, an auxiliary electrode, and a reference electrode comprise electrodes that differ in construction and are made from different materials.

Known in the present state of the art is also a three-electrode system incorporating an indicator electrode, a reference electrode, and an auxiliary electrode, wherein used as the indicator electrode is a stationary mercury electrode, consisting of a silver, graphite, carbon-reinforced fiber glass, or carbosital rod having an electrically insulated side surface and a mercury-coated end face (cf. "Polarographs and their application in practical analyses and examinations" by R.M-F.Salikhdzhanova and G.I.Ginzburg, 1988, Khimia Publishers, Moscow, pp.45-46 (in Russian).

Common disadvantages inherent in the heretofore-known types of the three-elctrode system are, first and foremost, restrictions as to the field of application which depends on the types of the indicator electrode and the reference electrode used. For instance, stationary indicator electrodes made of carboniferous materials devoid of mercury on their working surface function well in the positive potential region, whereas mercury indicator electrodes fail to operate altogether under potentials exceeding the mercury dissolution potential.

In addition, three-electrode systems making use of any of the heretofore-known indicator electrodes and reference electrodes are essentially specific, because they are not operable in every method of electrochemical analysis, that is, systems using dropping mercury electrodes cannot be used in inversion voltammetry, which incorporates the stage of a preliminary electrolysis; a system using a rotary disk electrode with a ring is incapable of replacing systems using a dropping mercury electrode or a static mercury drop electrode, whereas systems using stationary indicator electrodes cannot be used wherever a continuous refreshment of the indicator electrode working surface is involved.

The three-electrode systems in current use have rather large size which hampers application of such systems for analysis of ultralow quantities of solutions under examination. Furthermore, it is due to its construction features that each of the aforediscussed indicator electrodes or reference electrodes of a three-electrode system has but a short service life which mush less that of, e.g. a polarograph.

Practical application of any of the heretofore-known variants of voltamperometric analysis with the use of three-electrode systems using stationary indicator electrodes involves regular refreshment of the electrode surface. It is electrochemical cleaning that is most frequently employed for the purpose and is carried out by impressing upon the indicator electrode a potential of electrodissolution of the products of electrode reaction, said products shielding the working surface of said electrode and may bring it out of order, which affects adversely the capacity of measurements.

All voltamperometric analysis methods make use of reduction processes concurrently with concentration of the reaction products on the working surface of the indicator electrode, or of oxidation processes simultaneously with removal of the reaction products from the working surface of said electrode (electrochemical cleaning). However, a single measuring and setting circuit into which the indicator electrode is inserted, is incapable of concurrently effecting two opposite processes, which also affects adversely the capacity of measurements.

### Disclosure of the Invention

It is a principal object of the present invention to provide an electrode system and a device for examination of materials by voltamperometric analysis, using said system, which make it possible to perform every type of voltamperometric measurements within a broad range of working voltage values by using a single unified electrode system.

The foregoing object is accomplished due to the fact that in an electrode system for examining materials by virtue of a voltamperometric analysis, comprising a first indicator electrode, a reference electrode, and an auxiliary electrode, according to the invention, the first indicator electrode, the reference electrode, and the auxiliary electrode are made of the same electrically conducting material, measure geometrically alike, and are enclosed in a common casing made from an inert material which fills completely the casing interior.

It is expedient that the electrode system comprises also at least three similar electrodes enclosed in a common casing, each of said electrodes being electrically insulated from the other electrodes and has its own electric lead-out.

A mercury layer may be deposited on the end face of the electrodes used as an indicator electrode.

It is expedient that the electrodes are so arranged in the common casing that their axes of symmetry are situated on an imaginary circle through whose center the axis of symmetry of the common casing would pass, while the electrodes are spaced apart equidistantly, and one of electrodes is expedient to be so arranged in the common casing that its axis of symmetry aligns with the axis of symmetry of the common casing.

It is also desirable that the three electrodes used as indicator electrodes in carrying out a voltammetric analysis, are spaced apart equidistantly and are so arranged that their axes of symmetry lie in the same plane passing through the axis of symmetry of the common casing.

It is also convenient that the electrode system has current-collecting rings to each of which an electric lead-out of the respective electrode is connected and which are fixed on an inert-material holder locked-in with the common casing and rotatable together therewith.

The foregoing object is accomplished also due to the fact that in a device for examining material by virtue of a voltammetric analysis, comprising an electrochemical cell into which the material under examination and an electrode system are placed, said electrode system being electrically connected to the inputs of a polarograph, according to the invention, use is made of such an electrode system that comprises at least six similar electrodes which are electrically insulated from one another, are enclosed in a common hermetically sealed casing , have their own electric lead-outs, and are arranged in two similar groups, each comprising the electrodes used as an auxiliary electrode and a reference electrode, one of said groups of electrodes being permanently connected to a source of polarizing voltage, while the other group of electrodes is permanently connected to the polarograph, as well as a group of electrodes used as indicator electrodes of which one indicator electrode is connected, through a switching unit, to the polarograph, while the rest of the indicator electrodes are connected to the source of polarizing voltage, the switching unit being adapted to switch over the indicator electrodes, one by one, from one group to the other.

It is expedient that the device of the invention makes use of an electrode system comprising at least six similar electrodes which are enclosed in a common hermetically sealed casing, are electrically interconnected through current-collecting rings, and are used as an indicator electrode, as well as an additional reference electrode and an auxiliary electrode, both being enclosed in an electrochemical cell.

The device of the invention may also comprise an electrode system, incorporating at least six similar electrodes and used as two indicator electrodes, one of the electrodes of said system being so arranged that its axis of symmetry aligns with that of the common hermetically sealed casing, while the rest of the electrodes are electrically interconnected through respective current-conducting rings and are so arranged in the common hermetically sealed casing that their axes of symmetry are spaced apart equidistantly along an imaginary circle through the center of which passes the axis of symmetry of the common hermetically sealed casing.

The electrode system discussed before is capable of performing every kind of voltammetric measurements within a broad range of working voltage values and has unified electrodes which enable one to simplify the construction of the system, to miniaturize its size, and to extend its service life.

The electrode system comprising at least six similar electrodes enclosed in a common casing is capable, whenever necessary, of replacing any one of the heretofore-known three-electrode systems, thereby extending to a maximum degree the functional capabilities of the operating modes of electrochemical engineering equipment.

### Brief Description of the Drawings

In what follows the present invention will now be disclosed in a detailed description of illustrative embodiments thereof with reference to the accompanying drawings, wherein:
FIG.1 is a view of the electrode system, according to the invention, taken along a section of two of its electrodes;
FIG.2 is a plan sectional view of FIG.1;
FIG.3 is a longitudinal sectional view of an embodiment of the electrode system, according to the invention;
FIG.4 is a view facing an arrow A in FIG.3;
FIG.5 is a schematic view of a device for examining materials using the electrode system, according to the invention;
FIG.6. is another variant of use of the electrode system in the device, according to the invention;
FIG.7 is one more variant of use in the device, of the electrode system as a rotary disk electrode, according to the invention; and
FIG.8 is still more variant of use in the device, of the electrode system as a rotary disk electrode with a ring, according to the invention.

### Best Method of Carrying Out the Invention

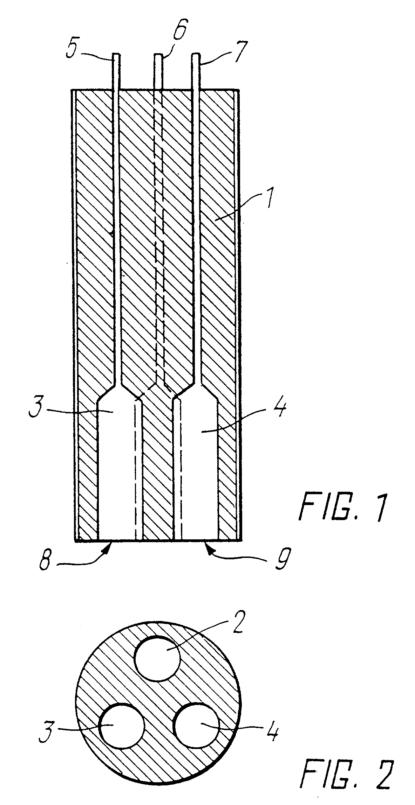

The electrode system comprises a common casing 1 (FIG.1) made of an inert material, e.g., tetrafluoroethylene and accommodating three electrodes 2, 3, and 4 (FIG.2) made of the same current-conducting material and measuring geometrically alike. The inert material fills the entire interior of the casing 1 (FIG.1), the electrodes 2, 3, and 4 being embedded therein. Each of the electrodes 2 to 4 has its own electric lead-out 5, 6, and 7, respectively.

The electrodes 2 to 4 are made of carbon-reinforced fiber glass, or carbosital, or pyrographite, or else any other similar material suitable for the purpose, and appear as rods having their open end faces 8 serving as the working surfaces. The electrodes made of the aforesaid materials are in fact chemically inert and are capable of withstanding, without showing any clear symptoms of destruction, the effect of electric current applied thereto in a wide range of polarizing voltage. When the end faces of the electrodes are subject to regular cleaning and grinding the service life of the electrode system becomes virtually unlimited.

In the course of a voltammetric analysis the electrodes 2 to 4 perform different functions, that is, the electrode 2 can serve as a reference electrode, the electrode 3, as an indicator electrode, and the electrode 4, as an auxiliary electrode.

When developing the construction of the present electrode system, one is to take account of the fact that in the course of operation of the electrode system current does not pass through the reference electrode, whereby no special requirements are imposed upon its construction, which refers equally to the construction of the auxiliary electrode. This enables all the three functionally different electrodes to be similar in construction, e.g., to be prepared from rods uniform in size and made of the same electrically conducting material. The rods are pressed in the common casing 1 made of an inert material and are spaced as close to one another as possible. Such an arrangement of the electrodes makes it possible not only to maximally reduce the size of the electrode system and to render it suitable for analysis of solutions of the substances under examination in an amount of 0.1-0.2 ml but also to minimize the residual current within the entire service life of the electrode system.

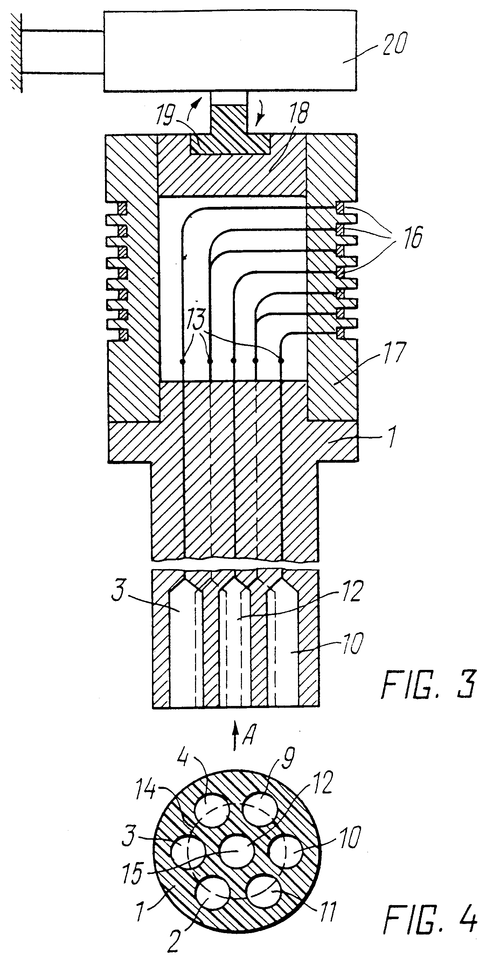

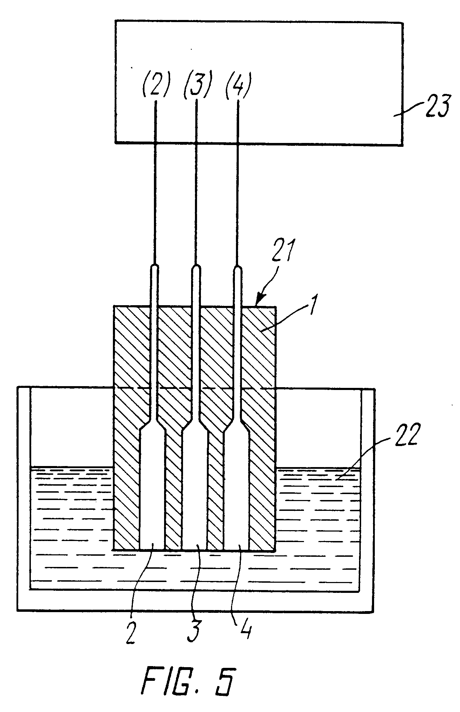

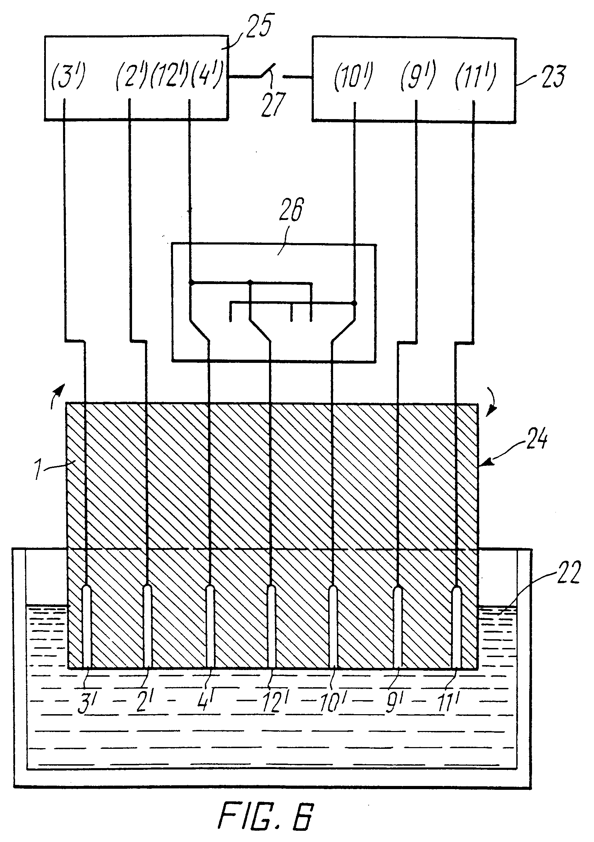

The electrode system may also comprise at least three electrodes as shown in FIGS. 3 and 4 which represent the system that comprises all in all seven similar electrodes 2, 3, 4, 9, 10, 11, and 12 made of the same electrically conducting material and insulated from one another by an inert material in which the electrodes 2-4 and 9-12 are pressed and which establishes the common casing 1. Each of the electrodes 2-4 and 9-12 has its own electric lead-out 13.

The electrodes 2-4 and 9-11 are enclosed in the common casing 1 so that their axis of symmetry are situated on an imaginary circle 14, the axis of symmetry of the casing 1 passing through a center 15 of said imaginary circle 14. The electrodes 2-4 and 9-11 are spaced apart equidistantly, while the electrode 12 is so positioned that its axis of symmetry alings at the center 15 of the circle 14 with the axis of symmetry of the common casing 1.

The functions of the electrodes 2-4 and 9-12 in the aforesaid embodiment of the electrode system depend on its use. The end surface of the electrodes serving as indicator electrodes is coated with a mercury layer, thus increasing the sensitivity of the entire electrode system several times, whereas the range of working voltage values decreases.

When used as the indicator electrodes the three electrodes 3, 10, and 12 are so arranged in the casing 1 that their axes of symmetry are spaced apart equidistantly in the same plane passing through the axis of symmetry of the common casing 1. Such an arrangement of said electrodes enables one to minimize diffusional interaction resulting from a difference between the concentrations of the substance under analysis on each of the indicator electrode. With such an arrangement of the electrodes the diffusional interaction may be neglected, because the indicator electrodes are switched over at a rather high frequency in the course of recording a voltammogram, which wall hereinafter be discussed in detail.

One auxiliary electrode and one reference electrode are arranged on either side of the line of indicator electrodes symmetrically thereto. Such an arrangement of the electrodes makes due allowance for the previous experience gained in voltammetric analysis and is technically realizable simply enough.

When practically applying such an electrode system, with the solution under examination being at rest, the substances under analysis from the electrode electrolyte layer at the end of the electrode system are liable to quickly reduce on the indicator electrode, whereby said electrolyte layer gets depleted. The thus-depleted electrode electrolyte layer functions as if it were a screen, which prevents mass transfer of the substances under analysis towards the indicator electrode. To provide an efficient refreshment of the electrode electrolyte layer the electrode system is rotatable at a constant speed in the working space of the electrochemical cell, as shown in FIGS. 3 and 4. Rotation of the electrode system makes it possible to continuously refresh the electrode elctrolyte layer, wherein the substances under analysis are located.

Each of the electric lead-outs 13 is connected to its own current-collecting ring 16, while all the rings 16 are spaced apart equidistantly in a fixed position on a holder 17 made of an inert material and installed on the common casing 1. The holder 17 is connected, through a blank cover 18, to a shaft 19 of a variable-speed electric motor 20.

Both of the pairs of auxiliary and reference electrodes are arranged along a circumference symmetrically with respect to the indicator electrodes, while the latter electrodes are arranged on the diameter of said circumference with a view to reducing the effect of interaction therebetween. Thus, in an electrode system having, e.g., seven electrodes the indicator electrode 12 (FIG.4) is located at the center of a circumference whereon two auxiliary electrodes 4, 11 and two reference electrodes 2, 9 are spaced apart equidistantly, while two indicator electrodes 3 and 10 are situated at the ends of the diameter of said circumference.

The rotatable electrode system can be used as a rotary disk electrode or a rotary disk electrode with a ring.

A rotary disk electrode is obtained by interconnecting the current-collecting rings 16 of all the electrodes 2-4 and 9-12. In this case the end of the electrode system is in fact a disk having active elements uniformly distributed over its surface. Such an electrode finds application in examinations, wherein mass transfer of the substance under examination in electrolyte is effected by forced convection rather than by diffusion alone so that the current-potential (voltammetric) curve recorded under such conditions is relatively insensitive to the speed of the polarizing voltage sweep in the current measurement circuit.

A rotary disk electrode with a ring is obtained by interconnecting the current-collecting rings 16 of the electrodes 2-4 and 9-11 arranged along the circumference of the working end of the electrode system. The central electrode 12 is in fact a disk, while a ring therearound is established by the rest of the electrodes 2-4 and 9-12 that are electrically interconnected. Such a system is applicable for examining the kinetics and the mechanism of complicated electrochemical reactions by registering their stages in the form of a signal-response to diffusional interaction of the products of the reaction between the ring and the disk.

Given below are some variants of practical use of the herein-proposed electrode system in devices for examining materials by virtue of voltammetric analysis.

An electrode system 21 (FIG.5) is placed in an electrochemical cell 22, wherein the material under examination in the form of a liquid is contained. The system 21 comprises different-function electrodes, i.e., the reference electrode 2, the indicator electrode 3, and the auxiliary electrode 4, all of them being connected to a measuring-and-setting unit in the capacity of which use is made of, e.g., a polarograph 23.

Such a device operates as follows.

Preparatory to starting operation the end face of the system 21 is polished. The working surfaces of the electrodes 2-4 must be smooth and free from scratches and traces of fluoroplastic.

Then the system 21 is placed in an electrochemical cell 22 containing electrolyte.

The electrodes 2-4 are arbitrarily connected to the polarograph obligatorily in a three-electrode mode and are subjected to three or five training cycles with a cathode-anode sweep in that area thereof on which measurements are to be taken.

The resultant voltammograms are recorded in a conventional way commonly adopted in the art nowadays.

As a rule, the system 21 consisting of the three carbon-reinforced fiber glass electrodes 2-4 starts operating immediately if the techniques of identifying any substances have been developed for an indicator electrode made of carboniferous materials. The identification techniques developed for a mercury or an amalgam indicator electrode need some modifications consisting in selecting an optimum concentration of an inert electrolyte or replacing it with another one.

The herein-proposed three-electrode system features a negligible residual current within a wide range of polarization voltage values.

The three-electrode system is instrumental in identification, by virtue of inversion voltammetry, of silver, bromine and iodine in photoemulsions; joint presence of lead and copper in Waelz slag waste products of zinc production process when the copper content of the solution under analysis in the form of an ammoniate complex exceeds that of lead more than three hundred times; mercury, copper, lead, and cadmium in sewage at the level of maximum permissible concentrations; and thiocarbamide in food products.

The device making use of a duplex electrode system 24 (FIG.6), comprising seven similar electrodes 2', 3', 4', 9', 10', 11', and 12', enclosed in a common casing 1', incorporates the electrochemical cell 22 containing a solution of the material under examination, into which are placed the electrode system 24, a measuring-and-setting unit, e.g., the polarograph 23, a polarizing voltage source 25 similar to that of the polarograph 23 itself, and a multichannel electronic switch 26.

Permanently connected to the polarograph 23 are a reference electrode 9', an auxiliary electrode 11', and one of the switched-over indicator electrodes, e.g., an electrode 10' which is connected through the electronic switch 26. The system under consideration establishes a current measuring circuit.

Permanently connected to the source 25 of polarizing voltage are a reference electrode 2' and an auxiliary electrode 4', while connected to the electron switch 26 are the rest of the switched-over electrodes, e.g., electrodes 3' and 12'. The electrodes 2'-4' and 12' connected to the polarizing voltage source 25 establish an aditional electric circuit.

The device under discussion operates similarly to the preceding device.

In addition, once a measurement cycle has been over, the indicator electrode 10' is switched over, by the electronic switch 26, from the current measuring circuit to the additional electric circuit for electrochemical cleaning, while a next indicator electrode, e.g., the electrode 3' having its working surface refreshed due to electrochemical cleaning, is connected to the current measuring circuit, that is, to the polarograph 23. The indicator electrodes 3', 10', and 12' are switched over automatically at a constant rate until the voltammogram is completely recorded.

In what follows the various modes of opertion of the device of FIG.6 will be discussed.

### I. Polarography

The device makes use of the electrode system of FIGS.3 and 4.

A potential of dissolutionn of reaction products on the indicator electrode is set by means of the polarizing voltage source 25 (FIG.6), an on-off switch 27 is opened, and the electric motor 20 (FIG.3) is energized, which rotates the electrode system 24 (FIG.6) in the solution under examination at a speed of 5-10 RPM. Said range of rotation speeds enables a laminar flow of the solution to be established at the end of the electrode system 24 which is capable of ensuring a refreshment of the electrode layer comparable, as to the rate, with a dropping mercury electrode.

Then the stay time of one electrode of the system 24 in the current measuring circuit is set, whereupon the electronic switch 26 connects continuously to said circuit one of the indicator electrodes 3', or 10', or 12' and reconnects said electrodes again to the voltage source 25 in a preset period of time.

The thus-recorded voltammograms resemble much, as to shape, classical polarograms obtained with the aid of a dropping mercury electrode.

### II. Voltammetry

First the operating mode of a static mercury drop electrode will hereinafter be considered.

Using the voltage source 25 one sets a potential of dissolution of reaction products on the indicator electrode the on-off switch 27 is opened, and the electric motor 20 (FIG.3) is energized, which rotates the electrode system 24 (FIG.6) in the solution under examination at a speed of 5-10 RPM. The electron switch 26 is controlled by a signal of the polarograph 23. The voltammetric curve in a preset potential sweep range is registered by the indicator electrode 10'. The electron switch 26 connects, in response to a signal telling of a completion of the potential sweep, a next indicator electrode (3' or 12') to the measuring circuit, whereupon the process of taking a voltammogram is repeated.

As to its shape the thus-obtained voltammogram coincides with that obtained with the aid of a heretofore-known static mercury drop electrode, the operating algorithm of both being similar.

The operating mode of a stationary indicator electrode is largely applicable in inversion voltammetry, that is, an analysis technique involving a preliminary concentration of the substances under examination on the surface of a solid electrode or in the volume of a liquid phase of an amalgam film electrode by virtue of electrolysis.

Three ways of practical realization of the aforesaid mode are possible.

Once the voltage source 25 (FIG.6) has been disconnected the reference electrode 2' and the auxiliary electrode 4' are connected to the respective electrodes 9' and 11' with a view to adding to their working surface. In this case the additional electric circuit ceases to perform its function, and the electronic switch 26 effects connection of one, two, or three indicator electrodes (3', 10', 12') to the measuring circuit and operation of said electrodes as a single electrode. The working surface of such an electrode can be changed, in an experiment, from one to three arbitrary unit surface areas. The electronic switch 26 makes it possible to operate with any of the used indicator electrodes for as long time as is desired and to change over to any of the other indicator electrodes at operator's will.

When a potential is set in the additional electric circuit equal to potential from which the sweeping process will start, the electrolysis potential is set in the measuring circuit. The on-off switch 27 is in the open position. In this variant the substances under examination are concentrated simultaneously onto all the three indicator electrodes (3', 10', 12'). Upon completion of the electrolysis process two of said indicator electrodes, e.g., 3' and 12', are switched over to the additional electric circuit, thus leaving the electrode 10' connected to the measuring circuit. Inasmuch as the inert electrolyte contained in the cell 22 quiets down before commencing the potential sweep process, the substances under examinations are neither accumulated nor dissolved on the indicator electrodes 3' and 12' connected to the additional electric circuit. Hence the amount of the substances that have previously been reduced on said electrodes remains unaffected. The electrode 12' is connected not until the respective voltammogram is registered on the indicator electrode 10'. Then the voltammograms corresponding to the electrode 12' and the electrode 3' are recorded in succession. Thus, three voltammograms are obtained in a single electrolysis stage, whereby the analysis time proper is reduced more than twice.

Once a voltage has been set in the additional electric circuit, differing by a few millivolts from the voltage wherefrom sweeping of the polarizing voltage in the measuring circuit is to start, the on-off switch 27 is closed. Then the stay time of one indicator electrode 10' in the measuring circuit is set, and the electronic switch 26 is triggered simultaneously with the start of the sweeping procedure, whereupon the electronic switch 26 connects automatically the electrodes one by one to the measuring circuit and reconnects said electrodes again to the additional electric circuit in a preset period of time. A next connection of each of the indicator electrode occurs not until the rest of the electrodes work up in said circuit. In the variant under consideration the voltage varies in step in both circuits from the instant of starting the sweeping procedure, while a constant potential difference between said circuits is observed at any instant of time in the case of a synchronous sweep of the polarizing voltage. A continuous constant-rate switching-over of the indicator electrodes 3', 10', 12' by the switch 26 from one circuit to the other, a constant potential difference being observed in both circuits, enables one to impress similar current pulses on said electrodes, which may be useful in analyzing diverse objects.

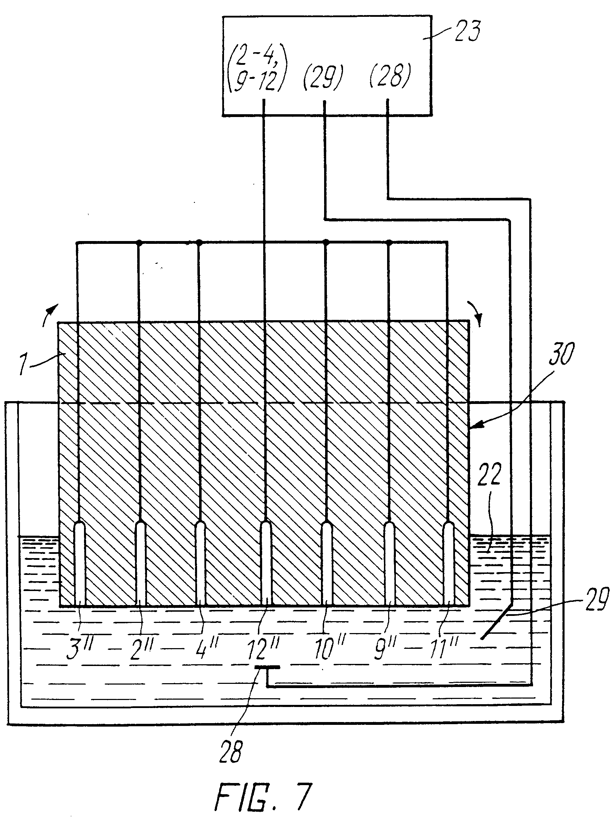

Now there is considered an embodiment of the device which makes use of an electrode system 30 having electrically interconnected electrodes 2'', 3'', 4'', 9'', 10'', 11'', and 12'' enclosed in a common casing 1'' made of an inert material, said system being convertible into a rotary disk electrode having the active areas of the working surface distributed uniformly over the end face thereof. The device (FIG.7) operates similarly to the device of FIG.5. The system 30 is rotatable by the electric motor 20 (FIG.3) with respect to a reference electrode 28 and an auxiliary electrode 29, both being inserted additionally in the cell 22.

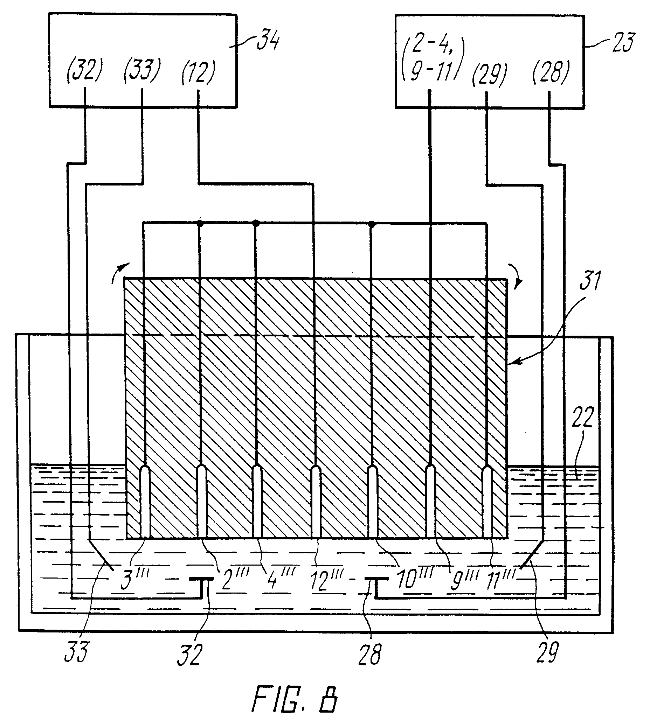

FIG.8 presents an embodiment of the device, wherein use is made of an electrode system 31 having electrically interconnected electrodes 2''', 3''', 4''', 9''', 10''', and 11''' which are enclosed in an inert-material common casing 1''' and are arranged circumferentially as shown in FIG.4 so as to establish a single ring-shaped indicator electrode, whereas an electrode 12''' located at the center of said circumference, is used as a disk-type indicator electrode. When each of said indicator electrodes is connected to its respective measuring-and-setting unit, a duplex three-electrode system is established, wherein one electrode system incorporates the ring-shaped indicator electrode formed by the electrically interconnected electrodes 2''', 3''', 4''', 9''', 10''', and 11''', the reference electrode 28, and the auxiliary electrode 29, all of them being connected to the polarograph 23, while the other three-electrode system comprises the disk-type indicator electrode 12''', a reference electrode 32, and an auxiliary electrode 33, all of them being connected to a measuring-and-setting unit 34. The electrode system 31 receives rotation from the electric motor 20 (FIG.3) so as to rotate in the cell 22 with respect to the stationary reference electrodes 28, 32 and the auxiliary electrodes 29, 33.

Used as the measuring-and-setting devices 23 and 34 may be any modern potentiostats, polarographs, or specially designed devices.

Thus, all voltammetric analysis techniques can be realized by using an assembly of seven similar electrodes.

The herein-proposed method of voltammetric measurements is capable, due to an additional electric circuit introduced into the electrochemical cell and provision of the indicator electrode in the form of a plurality of similar electrodes electrically insulated from one another, of cleaning said electrodes concurrently with the current measuring process, a feature that enables one to render the measuring process continuous in an automatic mode and hence to a maximum extent increase the capacity of measurements and cut down the analysis time.

An electrode assembly comprising seven similar electrodes in a common casing makes it possible to readily solve such problems hardly solvable heretofore as ensuring a synchronous operation of indicator electrodes in several cells which in turn enables difference voltammetry to be easily introduced into analytical practice; changing the working surface of an indicator electrode in the course of an experiment; and cutting down the analysis time in the inversion mode.

Discrete connection between the circuits of a cell carried out by switching-over similar indicator electrodes from one circuit to the other makes it possible to effect electrochemical cleaning of indicator electrodes immediately during the process of recording a voltammogram; to store the reduced substance on the electrodes disconnected from the measuring circuit; to change the shape of voltammograms by varying the potential in the additional electric circuit; and to impress current pulses on the indicator electrodes in case of a synchronous change of the polarizing voltage in the circuits.

### Industrial Applicability

The present invention can find application in determining the qualitative and quantitative composition of inorganic and organic substances in analytical practice, ecological examination, medical practice, in the metallurgical and chemical industries, and for some other similar purposes.

## Claims

1. An electrode system for examining materials by a voltammetric analysis, comprising a first indicator electrode (3), a reference electrode (2), and an auxiliary electrode (4), CHARACTERIZED in that the first indicator electrode (3), the reference electrode (2), and the auxiliary electrode (4) are made of the same electrically conducting material, measure geometrically alike, and are enclosed in a common casing (1) made from an inert material which fills completely the interior of the casing (1).

2. An electrode system according to Claim 1, CHARACTERIZED in that it comprises also at least three similar electrodes (9-12) enclosed in the common casing (1), each of said electrodes being electrically insulated from the other electrodes and has its own electric lead-out (5-7, 13).

3. An electrode system according to Claim 1 or 2, CHARACTERIZED in that a mercury layer is deposited on the end face (8) of the electrodes (3, 10, 12) which are used as an indicator electrode.

4. An electrode system according to Claim 2, CHARACTERIZED in that the electrodes (2-4, 9-11) are so arranged in the common casing (1) that their axes of symmetry are situated on an imaginary circle (14) through whose center (15) passes the axis of symmetry of the colon casing (1), while the electrodes (2-4, 9-11) are spaced apart equidistantly.

5. An electrode system according to Claim 4, CHARACTERIZED in that the electrode (12) is so arranged in the casing (1) that its axis of symmetry aligns with the axes of symmetry of the common casing.

6. An electrode system according to Claim 2, CHARACTERIZED in that the three electrodes (3, 10, 12) used as indicator electrodes in carrying out a voltammetric analysis, are spaced apart equidistantly and so arranged that their axes of symmetry lie in the same plane that passes through the axis of symmetry of the common casing (1).

7. An electrode system according to Claim 1, or 2, or 4, or 5 CHARACTERIZED in that it has current-collecting rings (16) to each of which an electric lead-out (13) of the respective electrode (2-4, 9-12) is connected and which are fixed on an inert-material holder (17) locked-in with the common casing (1) and rotatable together therewith.

8. A device for examining materials by a voltammetric analysis, comprising an electrochemical cell (22) into which the material under examination and an electrode system (24) are placed, said electrode system being electrically connected to the inputs of a polarograph (23), CHARACTERIZED in that use is therein made of the electrode system (24) that comprises at least six similar electrodes (2'-4', 9'-12') which are electrically insulated from one another, are enclosed in a common hermetically sealed casing (1'), have their own electric lead-outs (13), and are arranged in two similar groups, each comprising the electrodes used as an auxiliary electrode (2' or 11') and a reference electrode (3' or 9'), one of said groups of electrodes being permanently connected to a source (25) of polarizing voltage, while the other group of electrodes (11', 9') is permanently connected to the polarograph (23), as well as a group of electrodes (3', 10', 12') used as indicator electrodes of which one indicator electrode (10') is connected, through a switching unit (26), to the polarograph (23), while the rest of the indicator electrodes (3', 12') are connected to the source (25) of polarizing voltage, the switching unit (26) being adapted to switch over the indicator electrodes, one by one, from one group to the other.

9. A device for examining materials by a voltammetric analysis, comprising the electrochemical cell (22) into which the material under examination and an electrode system (30) are placed, said electrode system being electrically connected to the inputs of the polarograph (23), CHARACTERIZED in that use is therein made of the electrode system (30) comprising at least six similar electrodes (2''-4'', 9''-11'') which are enclosed in a common hermetically sealed casing (1''). are electrically interconnected through the current-collecting rings (16), and are used as an indicator electrode, as well as an additional reference electrode (28) and an auxiliary electrode (29), both being enclosed in the electrochemical cell (22).

10. A device for examining materials by a voltammetric analysis, comprising the electrochemical cell (22) into which the material under examination, an electrode system (31), reference electrodes (28, 32) and auxiliary electrodes (29, 33) are placed, said electrodes being electrically connected to the inputs of two measuring-and-setting units (23, 34), CHARACTERIZED in that use is therein made of the electrode system (31), comprising at least six similar electrodes and used as two indicator electrodes, and wherein an electrode (12''') is so arranged that its axis of symmetry aligns with that of a common hermetically sealed casing (1'''), while the rest of the electrodes (2'''-4''', 9''' -11''') are electrically interconnected through the respective current-conducting rings (16) and are so arranged in the common hermetically sealed casing (1''') that their axes of symmetry are spaced apart equidistantly along the imaginary circle (14) through the center (15) of which passes the axis of symmetry of the common hermetically sealed casing.
